# FASCICULE DE BREVET EUROPEEN

(11) **EP 3 476 733 B1**
(45) Date de publication et mention de la délivrance du brevet: **12.08.2020**
(21) Numéro de dépôt: 18191265.0
(22) Date de dépôt: 28.08.2018
(51) Int. Cl.: B64C 39/02, B64D 1/18

(54) **DRONE D'ACTIVITES INDUSTRIELLES**
DROHNE FÜR INDUSTRIELLE AKTIVITÄTEN
INDUSTRIAL ACTIVITY DRONE

(30) Priorité: 25.10.2017 FR 1771120
(43) Date de publication de la demande: 01.05.2019
(73) Titulaire: Airbus Helicopters, 13725 Marignane Cedex (FR)
(72) Inventeur: GIBERT, Gauthier, 13580 LA FARE LES OLIVIERS (FR); IMBERT, Nicolas, 13008 MARSEILLE (FR)
(74) Mandataire: GPI & Associés

(56) Documents cités:
- DE-B3-102015 015 742
- US-A1- 2015 041 593
- US-A1- 2016 260 207
- US-A1- 2017 291 439

## Description

La présente invention est du domaine du travail sur des zones difficiles d'accès ou bien sur des zones dangereuses, voire hostiles, pour un opérateur.

La présente invention concerne un drone d'activités industrielles capables de réaliser plusieurs tâches au cours d'un vol sur une zone difficile d'accès ou bien une zone dangereuse, voire hostile, pour un opérateur.

Le terme « drone » désigne généralement un aéronef de formes diverses sans pilote à son bord. Un drone comporte par exemple une voilure fixe et peut utiliser différents types de propulsion tels qu'un ou plusieurs réacteurs ou bien une ou plusieurs hélices. Un drone peut également comporter une ou plusieurs voilures tournantes, appelées aussi « rotors », participant à la sustentation et/ou à la propulsion du drone. Un drone comportant un ou plusieurs rotors permet en particulier d'effectuer des vols stationnaires ou à faibles vitesses d'avancement ainsi que des vols de croisière.

Chaque rotor peut être entraîné en rotation par un moteur de façon indépendante et piloté par un système de commande centralisé. Un drone classiquement utilisé aujourd'hui peut comporter trois, quatre, six, huit ou douze rotors par exemple. Chaque rotor est de préférence entraîné par un moteur électrique, mais peut toutefois être entraîné par un moteur thermique.

En outre, un drone peut soit être commandé à distance par un opérateur faisant fonction de pilote, le drone comportant dans ce cas au moins une caméra et au moins un dispositif de communication, soit voler de façon autonome, le drone comportant alors des dispositifs de positionnement, de navigation et de pilotage automatiques. Pour être autonome, un drone comporte notamment des dispositifs de positionnement dans son environnement afin d'évoluer en prenant en compte le relief et les obstacles qui l'entourent.

Un dispositif de positionnement du drone dans son environnement est par exemple un dispositif de localisation par faisceau laser connu sous l'acronyme « LIDAR » pour la désignation en langue anglaise « Light Détection And Ranging » et/ou un dispositif de localisation par ultrasons. Un dispositif de localisation peut aussi être un radioaltimètre afin de définir une hauteur du drone vis-à-vis du sol.

Un drone peut comporter également comme dispositif de positionnement au moins un gyroscope afin de se positionner et de s'orienter dans l'espace et, par la suite, de pouvoir se stabiliser en pilotant de façon appropriée chaque rotor.

Enfin, un drone peut comporter un dispositif de localisation par satellite, tel un récepteur GPS pour la désignation en langue anglaise « Global Positioning System » permettant de positionner le drone dans un repère terrestre.

Par ailleurs, la taille d'un drone peut varier de quelques centimètres à plusieurs mètres, voire davantage et sa masse de quelques grammes à plusieurs tonnes selon les missions auxquelles le drone est destiné.

L'utilisation des drones, limitée initialement essentiellement au domaine militaire et à un usage de loisirs, s'étend actuellement au domaine professionnel civil, par exemple pour les prises de vues aériennes. Un développement technologique rapide et varié des drones, grâce notamment à la miniaturisation des dispositifs de positionnement précédemment évoqué ainsi que des dispositifs de communication, leur ouvre aujourd'hui des perspectives d'applications importantes.

Par exemple, le document WO 2016/100601 décrit un drone équipé d'un dispositif de prise de vues et des méthodologies de gestion d'un tel drone pour la réalisation de prises de vues de cibles sélectionnées par l'intermédiaire d'un dispositif d'affichage affichant les images fournies par le dispositif de prise de vues.

Le document WO 2015/173627 décrit une plateforme aérostatique en forme de ballon apte à s'élever à des hauteurs variables et principalement destinée à supporter des antennes afin de transmettre des données ainsi que des dispositifs de surveillance aérienne. Le ballon est ancré au sol grâce à un dispositif de câbles d'amarrage actionné afin de permettre au ballon d'être élevé et abaissé.

Cette démocratisation récente des drones a toutefois imposé la mise en place de réglementations nationales dans de nombreux pays afin de régir l'utilisation de drones, en particulier en fonction de leurs tailles et/ou de leurs masses.

Un drone peut être considéré comme un vecteur aérien équipé et, à ce titre, peut comporter d'une part un vecteur aérien de base, assurant le vol du drone, à savoir la propulsion et la sustentation du drone ainsi que son positionnement dans son environnement et sa navigation, et d'autre part un système de d'activités embarqué destiné à réaliser une ou plusieurs tâches, telles qu'orienter un appareil de prise de vues et effectuer des prises de vues.

L'expression « vecteur aérien » désigne par la suite le sous-ensemble du drone assurant le vol du drone.

L'art antérieur comprend également des applications dans le domaine de la recherche de cibles, et en particulier dans le domaine du sauvetage de victimes d'accidents.

Par exemple, on connait le document WO 2014/0353422 qui décrit un drone télécommandé comportant un rotor principal et un rotor arrière, une caméra, une antenne pour transmettre des données et un équipement de sauvetage. Cet équipement de sauvetage peut comprendre un treuil muni d'un câble permettant de transporter la personne à secourir. Cet équipement de sauvetage peut également inclure un matériel largable, par exemple un kit de premiers secours pour la personne à secourir.

De même, le document WO 2016/159481 décrit un drone comprenant plusieurs rotors de sustentation et de propulsion ainsi qu'un dispositif de largage d'équipements de sauvetage pour un naufragé en mer par exemple. Le drone comporte également une caméra afin de détecter la présence d'un tel naufragé ainsi qu'un dispositif de libération de l'équipement de sauvetage afin de larguer cet équipement de sauvetage à proximité du naufragé.

Le document EP 2520343, décrit un drone permettant la recherche d'une cible par détection d'un signal émis par la cible. La détection de la cible est faite en fonction de l'intensité du signal reçu par le drone. La localisation d'une cible détectée peut être effectuée par la transmission de ses coordonnées déterminées par un dispositif de localisation embarqué. Le drone peut également comporter un moyen de marquage de la position de la cible détectée permettant par exemple de déposer une peinture, un fumigène ou une balise sonore. Cette application concerne en particulier la recherche de victimes suite à un accident et une avalanche en particulier.

En outre, on connaît dans le domaine militaire le document EP 2899491 décrivant une unité volante de petite taille configurée pour voler à basses altitudes et comportant un dispositif de marquage muni d'un émetteur spécifique permettant la désignation d'une cible. L'unité volante peut se poser avec l'émetteur sur la cible, telle qu'un char ou bien une mine par exemple, ou bien déposer uniquement l'émetteur sur la cible afin de permettre à un missile d'être guidé jusqu'à la cible grâce à l'émetteur. L'unité volante peut également embarquer une charge explosive et la déclencher à proximité d'une cible.

De plus, le document US 2015/0041593 décrit un drone destiné à libérer des insectes à proximité de zones prédéfinies. Le drone est piloté à distance et libère dans chaque zone un conteneur rempli d'insectes. Le drone comporte plusieurs rotors et des capteurs, par exemple une caméra, ainsi qu'un dispositif de distribution des conteneurs remplis d'insectes. Le dispositif de distribution comporte une partie externe munie d'une ouverture, une partie interne configurée pour tourner par rapport à la partie externe et muni d'emplacements pour les conteneurs et un actionneur permettant la rotation de la partie interne par rapport à la partie externe.

Par ailleurs, le document DE 10 2015 015742 décrit un drone destiné à l'examen d'une zone d'accident et à agir sur cette zone. Le drone peut être piloté à distance ou bien voler de façon autonome. Le drone comporte une caméra et un dispositif d'analyse des images enregistrées par la caméra. Le drone comporte également plusieurs conteneurs pouvant contenir de la mousse et/ou de la peinture de différentes couleurs destinées à marquer le sol dans la zone de l'accident ainsi que des agents de nettoyage afin de nettoyer cette zone. Le drone comporte alors un dispositif de pulvérisation de la mousse, de la peinture et/ou des agents de nettoyage.

On connaît enfin les documents US 2016/0260207 et US 2017/0291439 faisant partie de l'arrière plan technologique de l'invention.

Le but de la présente invention est donc de s'affranchir des limitations mentionnées ci-dessus et de proposer un drone d'activités industrielles permettant une mise en œuvre simple et rapide ainsi que la réalisation de plusieurs tâches au cours d'un vol du drone d'activités dans des zones de travail difficiles d'accès, dangereuses ou bien hostiles pour un opérateur.

Dans ce cadre, la présente invention a pour objet un drone d'activités selon la revendication 1.

Le vecteur aérien assure le vol du drone, à savoir la propulsion et la sustentation du drone ainsi que son positionnement dans son environnement et sa navigation. Le vecteur aérien peut voler de façon autonome ou bien être commandé à distance par un opérateur. A ce titre, le vecteur aérien comporte au moins un rotor de sustentation et de propulsion et un système de commande centralisé muni notamment de dispositifs de positionnement dans son environnement et de dispositifs de navigation et de pilotage ainsi que de dispositifs de communication. Le vecteur aérien comporte le cas échéant au moins une caméra de vol afin d'être commandé à distance par un opérateur. Le vecteur aérien comporte de préférence au moins trois rotors. Le vecteur aérien comporte par exemple trois, quatre, six, huit ou douze rotors. En conséquence, le drone d'activités selon l'invention peut effectuer des vols stationnaires ou des vols d'avancement à faibles vitesses ainsi que des vols de croisière à vitesses plus importantes.

Chaque rotor est entraîné en rotation de façon indépendante et commandé par le système de commande centralisé afin d'assurer les déplacements et la stabilisation du drone. Chaque rotor est de préférence entraîné par un moteur électrique, mais peut aussi être entraîné par un moteur thermique.

Le vecteur aérien comporte également au moins une source d'énergie afin d'alimenter d'une part chaque moteur entraînant un rotor et d'autre part le système de commande centralisé. Dans ce but, le vecteur aérien comporte de préférence une ou plusieurs batteries électriques.

Le vecteur aérien peut avantageusement être un vecteur aérien standard, à savoir un vecteur aérien existant et commercialisé, ne nécessitant donc aucun coût de développement et/ou de fabrication spécifique.

Le drone d'activités selon l'invention est remarquable en ce que le système d'activités comporte :
- une structure,
- un calculateur,
- au moins une caméra de travail fixe par rapport au vecteur aérien et permettant une vision d'une zone de travail, et
- un dispositif de distribution pour réaliser successivement plusieurs tâches, le dispositif de distribution comportant plusieurs compartiments contenant respectivement au moins un objet, au moins une tâche étant attachée à chaque compartiment.

Le système d'activités est ainsi capable de réaliser plusieurs tâches lors d'un vol du drone d'activités, et en particulier lors d'un vol stationnaire face à une zone de travail.

Chaque caméra de travail est fixe par rapport au vecteur aérien et reste ainsi toujours orientée sur la zone de travail lors de ce vol stationnaire. Chaque caméra de travail permet alors à un opérateur situé à distance de la zone de travail d'avoir une vision sur cette zone de travail. Chaque caméra de travail peut également permettre d'enregistrer les tâches réalisées par le drone d'activités, le système d'activités comportant alors un dispositif de stockage des images enregistrées par chaque caméra de travail.

Il est alors possible de faire un « post traitement » de ces images enregistrées, afin par exemple d'en extraire des prises de mesure et/ou de réaliser un traitement numérique tel qu'une reconnaissance d'images et de formes de sorte à rechercher notamment des formes spécifiques prédéfinies.

Au moins une caméra de travail peut être partagée avec le vecteur aérien et constitue alors également une caméra de vol pour permettre le pilotage à distance du drone d'activités par un opérateur afin de limiter la masse du drone d'activités. Une telle caméra de travail et de vol peut par exemple être agencée sur le vecteur aérien ou bien sur la structure du système d'activités.

Toutefois, chaque caméra de travail peut être dédiée au système d'activités, la ou les focales nécessaires à la réalisation des tâches envisagées pouvant ne pas être compatibles avec la réalisation d'un vol sûr. Par ailleurs, le système d'activités peut comporter plusieurs caméras de travail de focales différentes permettant par exemple d'une part une vision large de la zone de travail et d'autre part une vision précise sur une partie spécifique de la zone de travail. Le système d'activités peut également comporter une seule caméra de travail munie de focales variables permettant une vision large de la zone de travail ainsi qu'une vision précise sur une partie spécifique de la zone de travail.

Le système d'activités peut également comporter un système d'éclairage afin d'éclairer la zone de travail. Ce système d'éclairage est muni par exemple d'une ou de plusieurs diodes électroluminescentes désignées par l'acronyme « LED » pour la désignation en langue anglaise « Light-Emitting Diode », ou bien tout autre dispositif d'éclairage.

Le vecteur aérien du drone d'activités selon l'invention comporte au moins un rotor permettant la réalisation d'un vol stationnaire stable. Dès lors, pour la réalisation d'une tâche ou de plusieurs tâches, le drone d'activités réalise un vol stationnaire stable afin que la caméra de travail reste face à la zone de travail.

Avantageusement, un dispositif de positionnement du drone d'activités, tel un dispositif de localisation par faisceau laser ou bien un dispositif de localisation par ultrasons, permet au drone d'activités de se positionner vis-à-vis de son environnement et en particulier à une distance prédéterminée de la zone de travail, garantissant d'une part une distance de sécurité entre la zone de travail et le drone d'activités et d'autre part une distance permettant la réalisation des tâches prévues sur cette zone de travail.

L'utilisation d'un dispositif de distribution permet de réaliser successivement plusieurs tâches sur la zone de travail, le drone d'activité restant en vol stationnaire stable devant la zone de travail. De plus, les compartiments du dispositif de distribution contiennent respectivement un ou plusieurs objets afin de réaliser ces tâches sur la zone de travail.

De la sorte, l'utilisation d'un dispositif de distribution permet avantageusement un gain de temps par rapport à une rotation du drone d'activités dans sa totalité. En effet, le drone permet de maintenir un vol stationnaire stable pendant une rotation relative du dispositif de distribution par rapport au vecteur aérien. Par contre, une rotation du drone d'activités dans sa totalité, le dispositif de distribution étant alors fixe par rapport au vecteur aérien, nécessite un temps de stabilisation du vol stationnaire à la nouvelle position augmentant de la sorte la durée de réalisation des différentes tâches.

De plus, le drone d'activités selon l'invention peut aisément atteindre des zones de travail difficilement accessibles voir dangereuses pour un opérateur. Le drone d'activités permet ainsi des interventions dans des zones de travail difficiles d'accès, par exemple :
- des zones supérieures d'un avion, tel un empennage,
- des zones supérieures de monuments ou bien de pylônes,
- le tablier et les piliers de ponts, et
- la structure d'une plateforme pétrolière.

Le drone d'activités permet aussi des interventions dans des zones de travail dangereuses voire hostiles pour un opérateur, telles que par exemple des zones de travail susceptibles de comporter des gaz toxiques.

Le drone d'activités permet de la sorte la réalisation d'interventions comportant plusieurs tâches à la place d'un opérateur et sans la mise en place d'infrastructures complexes permettant à un opérateur d'atteindre la zone de travail et/ou d'assurer la sécurité de l'opérateur.

Le système d'activités est de préférence positionné sous le vecteur aérien, ce qui permet un bon centrage du centre de gravité massique du drone d'activités.

La structure du système d'activités permet de supporter les autres éléments du système d'activités, en particulier le calculateur et le dispositif de distribution. La structure peut également former un train d'atterrissage fixe du drone d'activités, à savoir un train d'atterrissage non escamotable, permettant avantageusement au drone d'être autonome pour se maintenir au sol de façon stable et sans dégrader ses composants et notamment les rotors du vecteur aérien. De la sorte, le drone selon l'invention peut décoller et atterrir de façon autonome directement par rapport au sol. De plus, cette structure assure également une protection des autres composants du système d'activités, en particulier le calculateur et le dispositif de distribution.

En l'absence d'un train d'atterrissage, le drone selon l'invention nécessite un opérateur tenant le drone lors d'un décollage et attrapant le drone lors d'un atterrissage afin d'éviter toute dégradation du drone.

La structure du système d'activités est formée par exemple en matériaux composites ou bien en matériaux plastiques de sorte à limiter avantageusement la masse de la structure tout en permettant une rigidité suffisante à cette structure et, par suite, au système d'activités. La structure peut aussi être faite en matériaux métalliques, par exemple en aluminium.

Le système d'activité du drone d'activités selon l'invention peut comporter un moteur rotatif permettant une rotation relative du dispositif de distribution par rapport au vecteur aérien. De la sorte, le moteur rotatif permet de positionner le compartiment devant être utilisé pour la réalisation d'une tâche à une position d'utilisation prédéterminée par rapport à la zone de travail. Puis pour passer à la réalisation d'une nouvelle tâche sur la même zone de travail, le moteur rotatif permet avantageusement la rotation relative du dispositif de distribution par rapport au vecteur aérien et à la zone de travail de sorte qu'un nouveau compartiment devant être utilisé se trouve à son tour à la position d'utilisation prédéterminée, le drone d'activités étant en vol stationnaire sensiblement immobile vis-à-vis de la zone de travail. Le moteur rotatif permet avantageusement le passage successif de chaque compartiment à la position d'utilisation prédéterminée par rapport à la zone de travail pour la réalisation de ces tâches sur la zone de travail.

Cette position d'utilisation prédéterminée de chaque compartiment par rapport à la zone de travail est par exemple située face à la zone de travail.

La structure peut être fixe par rapport au vecteur aérien et par rapport à la caméra de travail. Dans ce cas, le moteur rotatif est agencé de préférence entre la structure et le dispositif de distribution permettant une rotation relative du dispositif de distribution par rapport à la structure et au vecteur aérien. Le dispositif de fixation permet alors une liaison entre la structure du système d'activités et le vecteur aérien.

La structure peut être solidaire du dispositif de distribution et donc mobile en rotation par rapport au vecteur aérien et par rapport à la caméra de travail. Dans ce cas, le moteur rotatif est agencé de préférence entre la structure et le vecteur aérien permettant une rotation relative du dispositif de distribution et de la structure par rapport au vecteur aérien. Le dispositif de fixation permet alors une liaison entre le moteur rotatif du système d'activités et le vecteur aérien.

Le moteur rotatif comprend éventuellement un moteur électrique, par exemple un moteur pas à pas.

Le drone d'activités est généralement piloté à distance par un opérateur pour atteindre la zone de travail et revenir à la base de départ ou bien se diriger vers un point de retour. Le drone d'activités peut alors comporter un dispositif de communication de manière à d'une part recevoir des ordres de commande de l'opérateur et d'autre part transmettre les images fournies par la caméra de vol. Ce dispositif de communication permet également de transmettre les images fournies par chaque caméra de travail à un opérateur situé à distance de la zone de travail et de recevoir des ordres de travail fournis par l'opérateur pour la réalisation des tâches.

Le dispositif de communication est relié au calculateur du système d'activités par une liaison filaire ou bien une liaison sans fil de façon connue. Le calculateur permet alors de commander selon ces des ordres de travail le moteur rotatif afin de positionner chaque compartiment du dispositif de distribution de sorte que le compartiment devant être utilisé se trouve à la position d'utilisation prédéterminée. Le calculateur du système d'activités permet ensuite de commander toujours selon ces ordres de travail le dispositif de distribution et en particulier le compartiment devant être utilisé pour la réalisation d'une ou de plusieurs tâches. Dans ce but, le calculateur est relié au moteur rotatif et si besoin au dispositif de distribution par une liaison filaire ou bien par une liaison sans fil.

Le calculateur du système d'activités peut également fournir des ordres de commande au vecteur aérien et en particulier au système de commande centralisé du vecteur aérien afin d'une part que le drone atteigne rapidement et de façon autonome la zone de travail, dont les coordonnées ont été fournies préalablement au drone, et d'autre part que le drone revienne à une base de départ ou bien se dirige vers un point de retour, dont les coordonnées ont été fournies au drone, à la fin de l'intervention ou bien lorsque son niveau d'énergie embarquée est insuffisant pour continuer l'intervention. Dans ce but, le calculateur du système d'activités est relié au système de commande centralisé du vecteur aérien par une liaison filaire ou bien par une liaison sans fil de façon connue. De plus, le drone d'activités peut comporter un dispositif de localisation, tel un récepteur GPS, permettant de localiser le drone d'activités dans un repère terrestre.

Le calculateur peut également comporter un dispositif d'analyse d'images configuré afin d'analyser les images fournies par chaque caméra de travail et de réaliser les tâches de façon autonome. De plus, le calculateur peut intégrer des moyens et des analyses du domaine de l'intelligence artificielle lui permettant d'apprendre de son expérience au fur et à mesure des analyses d'images et des interventions réalisées. De la sorte, le calculateur est apte à prendre des décisions suite à son analyse d'images afin d'être de plus en plus performant.

En outre, le calculateur du système d'activités peut être déporté sur le vecteur aérien et être par exemple intégré au système de commande centralisé du vecteur aérien. De la sorte, le calculateur est communalisé entre le système d'activités et le vecteur aérien afin de limiter la masse du drone.

Par ailleurs, le système d'activités peut comporter une source d'énergie, telle une batterie électrique, le système d'activités étant alors autonome au niveau énergétique.

Le système d'activités peut ne pas comporter de source d'énergie et utiliser au moins une source d'énergie du vecteur aérien afin d'alimenter électriquement le calculateur, chaque caméra de travail, le moteur rotatif et le dispositif de distribution, ainsi que chaque compartiment qu'il comporte si besoin. Cette utilisation commune de sources d'énergie par le vecteur aérien et le système d'activités peut permettre avantageusement d'optimiser la masse du drone d'activités selon l'invention.

Le drone d'activités selon l'invention a de préférence des dimensions et une masse réduites afin de permettre un transport facile au plus près d'une zone de travail. De plus, ces dimensions et cette masse réduites peuvent également permettre de limiter les restrictions réglementaires auxquelles le drone d'activités selon l'invention peut être soumis.

La masse du drone selon l'invention est par exemple inférieure ou égale à trois kilogrammes (3kg), le système d'activités ayant une masse de l'ordre de 1 kg. Ses dimensions sont par exemple une hauteur de l'ordre de 0.3 mètre (0.3m) ainsi qu'une largeur et une longueur de l'ordre de 1 m.

Par ailleurs, le dispositif de fixation du système d'activités au vecteur aérien permet de préférence un montage et un démontage rapides entre le vecteur aérien et le système d'activités, limitant de la sorte l'encombrement du drone selon l'invention lorsqu'il est démonté et facilitant ainsi son transport. De même, le vecteur aérien est aussi démontable de préférence.

De la sorte, le drone d'activités selon l'invention peut avantageusement être acheminé facilement, par exemple par un transporteur sur un lieu nécessitant son intervention. Ensuite, le système d'activités peut être assemblé rapidement au vecteur aérien pour former le drone d'activités selon l'invention qui est ainsi opérationnel rapidement.

Enfin, l'intervention à réaliser par le drone d'activités peut être faite sans la présence d'un expert sur le lieu de la mission, l'expert pouvant en effet analyser son déroulement ou bien ses résultats après sa réalisation. Cette intervention peut également être suivie à distance par un expert, pendant sa réalisation, le drone pouvant éventuellement être piloté à distance par cet expert. Dans les deux cas, les coûts de l'intervention restent limités et sa réalisation peut être rapide sans mobiliser un expert sur une longue période, ni d'infrastructures importantes.

Un dispositif de fixation peut par exemple comporter au moins une vis et un écrou, ou bien uniquement une ou plusieurs vis afin de maintenir le système d'activités avec le vecteur aérien. La masse du système d'activités étant faible, un dispositif de fixation peut également être formé par des bandes auto-agrippantes connues par exemple sous le nom commercial « Velcr® », un bande auto-agrippante mâle étant par exemple solidaire du vecteur aérien et une bande auto-agrippante femelle étant solidaire du système d'activités.

Tout autre moyen de fixation permettant une liaison fiable et facilement démontable peut être utilisé comme dispositif de fixation entre le vecteur aérien et le système d'activités.

De plus, le système d'activités est également interchangeable facilement et rapidement pour adapter le drone d'activités à l'intervention à réaliser afin de passer par exemple d'une mission d'analyse de la corrosion à une mission d'analyse de la toxicité d'un gaz issu d'une fuite.

Le système d'activités peut aussi être par exemple un système de recherche et de marquage d'une cible afin par exemple de rechercher des victimes d'une avalanche. Dans ce cas, le système d'activités comporte au moins un dispositif de détection d'une cible, à savoir la victime, et le dispositif de distribution est adapté afin de distribuer un élément de marquage pour chaque cible détectée, chaque compartiment du dispositif de distribution étant destiné à contenir respectivement un élément de marquage, tel que de la poudre de couleur ou bien de la peinture.

Par ailleurs, le système d'activités peut comporter un pôle commun utilisé de façon commune par plusieurs compartiments du dispositif de distribution. L'utilisation d'un pôle commun par plusieurs compartiments permet de partager ce pôle commun avec ces compartiments et permet de la sorte d'optimiser la masse du système d'activités et, par suite, la masse du drone d'activités. Le calculateur permet également de commander ce pôle commun en fonction des ordres de travail reçus.

Selon un premier mode de réalisation du drone d'activités selon l'invention, le système d'activités comporte un moteur rotatif permettant la rotation relative du dispositif de distribution par rapport au vecteur aérien de sorte que le compartiment devant être utilisé pour la réalisation d'une tâche se trouve à une position d'utilisation prédéterminée par rapport à ladite zone de travail. Le pôle commun comporte un générateur de pression alors que des objets contenus respectivement dans plusieurs compartiments sont un fluide et une buse de pulvérisation de sorte que, lorsqu'un des compartiments comportant un fluide et une buse de pulvérisation se trouve à la position d'utilisation prédéterminée pour la réalisation d'une tâche, le système d'activités pulvérise le fluide à travers la buse de pulvérisation du compartiment sur la zone de travail grâce au générateur de pression. Le moteur rotatif du système d'activité permet pour ce premier mode de réalisation de positionner le compartiment devant être utilisé à cette position d'utilisation prédéterminée qui est généralement située face à la zone de travail. En cas de besoin et selon l'activité à réaliser, le fluide peut être remplacé par une poudre susceptible d'être pulvérisée par l'intermédiaire de la buse de pulvérisation.

Pour ce premier mode de réalisation, le pôle commun peut également comporter un système de valves permettant de relier le fluide du compartiment devant être utilisé avec le générateur de pression de ce pôle commun, ce système de valves étant piloté par le calculateur. De la sorte, ce système de valves permet au générateur de pression d'agir sur le fluide et de le diriger vers la buse de pulvérisation du compartiment utilisé.

Selon ce premier mode de réalisation, la structure du système d'activités peut être solidaire du dispositif de distribution et mobile en rotation par rapport au vecteur aérien et à la caméra de travail, le pôle commun étant alors de préférence solidaire de la structure et du dispositif de distribution.

La structure du système d'activités peut également être fixe par rapport au vecteur aérien, le dispositif de distribution étant alors mobile par rapport à la structure et au vecteur aérien. Le pôle commun peut alors être solidaire de la structure, le système de valves permettant de relier le fluide du compartiment devant être utilisé avec le générateur de pression du pôle commun, ce compartiment étant mobile vis-à-vis du générateur de pression. Le pôle commun peut également être solidaire du dispositif de distribution.

Ce premier mode de réalisation du drone d'activités selon l'invention peut être en particulier destiné à la réalisation d'une analyse chimique avec plusieurs fluides sur la zone de travail afin par exemple de vérifier l'état de dégradation d'un pont ou bien d'un monument. Ce premier mode de réalisation est particulièrement adapté pour réaliser une analyse de l'état de la corrosion des éléments métalliques d'un pont, d'un monument ou encore d'un avion. Ce premier mode de réalisation permet en particulier l'application sur la zone de travail de plusieurs fluide afin d'analyser la présence de corrosion et, le cas échéant, le type et la profondeur de cette corrosion.

Une caméra de travail permet de vérifier l'effet de la pulvérisation du fluide sur la zone de travail et en particulier la réaction chimique qui peut se produire de sorte à en déduire éventuellement le niveau de dégradation de cette zone de travail. La caméra de travail peut, comme évoqué précédemment, comporter une focale variable ou bien adaptée afin d'avoir une vision précise sur la partie spécifique de la zone de travail où le fluide a été pulvérisé.

Ce premier mode de réalisation du drone d'activités selon l'invention permet avantageusement de réaliser cette analyse pour un coût réduit, un expert n'ayant pas besoin de se trouver sur les lieux de cette analyse. Une telle analyse permet notamment de réaliser un pré-diagnostique afin d'estimer l'état de la corrosion avant d'envoyer une équipe si nécessaire afin de traiter cette corrosion de manière adéquate.

Par ailleurs, certaines corrosions peuvent être nocives pour l'homme. C'est par exemple le cas de la corrosion sur les connecteurs des faisceaux électriques. Dès lors, le premier mode de réalisation du drone d'activités selon l'invention permet avantageusement de réaliser à distance l'analyse de la corrosion de ces éléments évitant ainsi tout risque de contact d'un opérateur avec ce type de corrosion.

Le drone d'activités selon l'invention peut aussi être adapté pour l'analyse de tout autre type de dégradation, par exemple l'analyse de champignons et d'autres végétaux susceptibles de se trouver sur des ouvrages d'arts.

Selon un deuxième mode de réalisation du drone d'activités selon l'invention, le pôle commun comporte un générateur de pression et une seule buse de pulvérisation alors qu'un objet contenu respectivement dans plusieurs compartiments est un fluide de sorte que, lorsqu'un des compartiments comportant un fluide doit être utilisé, le système d'activités pulvérise le fluide grâce au générateur de pression à travers la buse de pulvérisation du pôle commun sur la zone de travail. Le pôle commun peut également comporter un système de valves permettant de relier le fluide du compartiment devant être utilisé avec le générateur de pression et la buse de pulvérisation, ce système de valves étant piloté par le calculateur. De la sorte, ce système de valves permet au générateur de pression d'agir sur le fluide et de le diriger vers la buse de pulvérisation du pôle commun. Dans tous les cas, la buse de pulvérisation du pôle commun est orientée par l'intermédiaire du vecteur aérien vers la zone de travail.

Selon une première variante de ce deuxième mode de réalisation, le dispositif de distribution est fixe par rapport au vecteur aérien. Le système de valves du pôle commun relie respectivement et de façon permanente le fluide de chaque compartiment avec le générateur de pression, le calculateur pilotant alors le système de valves afin d'ouvrir ce système de valves de façon adéquate pour que le fluide du compartiment devant être utilisé soit dirigé vers la buse de pulvérisation.

Selon une seconde variante de ce deuxième mode de réalisation, le dispositif de distribution est mobile en rotation par rapport au vecteur aérien, le système d'activités comportant un moteur rotatif permettant la rotation relative du dispositif de distribution par rapport au vecteur aérien de sorte que le compartiment devant être utilisé pour la réalisation d'une tâche se trouve à une position d'utilisation prédéterminée par rapport à ladite zone de travail. Dès lors, le système de valves du pôle commun permet de relier le fluide du compartiment situé à la position d'utilisation prédéterminée avec le générateur de pression et la buse de pulvérisation du pole commun.

Selon cette seconde variante du deuxième mode de réalisation, la structure du système d'activités est de préférence fixe par rapport au vecteur aérien et la caméra de travail, le pôle commun étant alors solidaire de cette structure. Le moteur rotatif permet ainsi une rotation relative du dispositif de distribution de tâches par rapport à la structure, au vecteur aérien et au pôle commun.

Ce deuxième mode de réalisation du drone d'activités selon l'invention peut en particulier être destiné à la réalisation d'une analyse chimique avec plusieurs fluides sur la zone de travail, comme le premier mode de réalisation.

Selon un troisième mode de réalisation du drone d'activités selon l'invention, le système d'activités comporte un moteur rotatif permettant la rotation relative du dispositif de distribution par rapport au vecteur aérien de sorte que le compartiment devant être utilisé pour la réalisation d'une tâche se trouve à une position d'utilisation prédéterminée par rapport à ladite zone de travail. Le pôle commun comporte un bras articulé de sorte que, lorsqu'un des compartiments contenant au moins un objet se trouve à la position d'utilisation prédéterminée pour la réalisation d'une tâche, le bras articulé se saisit d'un objet contenu dans le compartiment pour réaliser la tâche. La structure du système d'activités est de préférence fixe par rapport au vecteur aérien et la caméra de travail, le pôle commun, à savoir le bras articulé, étant alors solidaire de cette structure. Le moteur rotatif permet de la sorte une rotation relative du dispositif de distribution de tâches par rapport à la structure, au vecteur aérien et au pôle commun.

Par exemple, un objet contenu dans plusieurs compartiments comporte un tissu imprégné d'un composant destiné à réagir avec un gaz spécifique de sorte à analyser l'air et de détecter la présence éventuelle d'un gaz spécifique, et en particulier un gaz toxique. De la sorte, le bras articulé peut saisir successivement, après chaque rotation du dispositif de distribution, les différents tissus imprégnés de différents composants dans ces compartiments et les présenter à proximité de la zone de travail où la présence d'un ou de plusieurs gaz toxiques est suspectée par exemple suite à une fuite. Avantageusement, la présence d'un ou de plusieurs gaz peut être mise en évidence sans risque pour un opérateur.

En outre, un objet contenu dans un compartiment du dispositif de distribution peut aussi être un outil utilisé par le bras articulé du pôle commun.

Ainsi, le drone d'activités selon l'invention permet avantageusement de réaliser diverses tâches rapidement, en limitant les moyens et donc les coûts engagés. Tout d'abord, le drone selon l'invention permet un accès plus rapide à une zone de travail, quelques soient ses conditions d'accès. Ensuite, un expert peut suivre l'intervention à distance, ce qui contribue à limiter les coûts de l'intervention. Enfin, le drone d'activités selon l'invention permet de s'adapter facilement et rapidement aux tâches à réaliser, le système d'activités étant interchangeable.

L'invention et ses avantages apparaîtront avec plus de détails dans le cadre de la description qui suit avec des exemples de réalisation donnés à titre illustratif en référence aux figures annexées qui représentent :
- les figures 1 à 3, diverses modes de réalisation d'un drone d'activités, et
- les figures 4 à 7, des vues détaillées de ces modes de réalisation d'un drone d'activités.

Les éléments présents dans plusieurs figures distinctes sont affectés d'une seule et même référence.

De façon commune aux trois modes de réalisation représentés sur les figures, un drone d'activités 10 comporte un vecteur aérien 1, un système d'activités 2 et un dispositif de fixation 3 du système d'activités 2 au vecteur aérien 1. Le vecteur aérien 1 et le dispositif de fixation 3 sont identiques pour les trois modes de réalisation d'un drone d'activités 10.

Le vecteur aérien 1 représenté sur les figures comporte quatre rotors 11, chaque rotor 11 étant entraîné en rotation respectivement par un moteur électrique 13 et participant à la sustentation et à la propulsion du drone d'activités 10. Chaque rotor 11 est implanté à l'extrémité d'un bras 12, chaque bras 12 étant relié à un corps central 14. Ce corps central 14 assure la liaison entre les quatre bras 12 ainsi que la rigidité nécessaire du vecteur aérien 1. Le corps central 14 comporte un système de commande centralisé 15 et deux batteries électriques 16.

Les bras 12 et le corps central 14 peuvent être facilement et rapidement séparés et assemblés afin de limiter l'encombrement du vecteur aérien 1 lors de son transport.

Le système de commande centralisé 15 permet de commander le pilotage du drone d'activités 10, que ce pilotage soit autonome ou bien commandé à distance, en agissant sur les moteurs électriques 13 entraînant chaque rotor 11 et provoquant ainsi les déplacements et/ou la réalisation d'un vol stationnaire du drone d'activités 10 ainsi que sa stabilisation en vol. Le système de commande centralisé 15 est relié à chaque moteur électrique 13 par une liaison filaire ou bien par une liaison sans fil et comporte notamment des dispositifs de positionnement du drone d'activités 10 dans son environnement et des dispositifs de navigation et de pilotage ainsi qu'un dispositif de communication.

Les systèmes d'activités 2 des trois modes de réalisation du drone d'activités 10 comportent de façon commune :
- une structure 21,
- un calculateur 23,
- une caméra de travail 7 fixe par rapport au vecteur aérien 1 et permettant une vision d'une zone de travail,
- un pôle commun 40,
- un dispositif de distribution 24 pour réaliser successivement plusieurs tâches sur cette zone de travail et comportant plusieurs compartiments 31,32,33,34 contenant un ou plusieurs objets 35, et
- un moteur rotatif 29 permettant une rotation relative du dispositif de distribution 24 par rapport au vecteur aérien 1.

Le moteur rotatif 29 permet une rotation relative du dispositif de distribution 24 par rapport au vecteur aérien 1 de sorte que le compartiment 31,32,33,34 devant être utilisé se trouve à une position prédéterminée par rapport à la zone de travail, cette zone de travail correspondant au champ de vision de la caméra de travail 7.

La caméra de travail 7 constitue également une caméra de vol permettant à un opérateur pilotant le drone d'activités 10 à distance de visualiser l'environnement du drone d'activités 10. Dans ce but, le drone d'activités 10 utilise le dispositif de communication du système de commande centralisé 15 du vecteur aérien 1. La caméra de travail 7 peut également être orientable afin d'une part de de faciliter la vision de la zone de travail et d'autre part d'orienter son champ de vision dans la direction de vol du drone d'activités 10 lorsque la caméra de travail 7 constitue une caméra de vol.

De plus, pour les trois modes de réalisation du drones d'activités 10, la structure 21 peut former un train d'atterrissage 20 fixe permettant avantageusement au drone d'activités 10 de se maintenir de façon stable au sol tout en protégeant les composants du système d'activités 2.

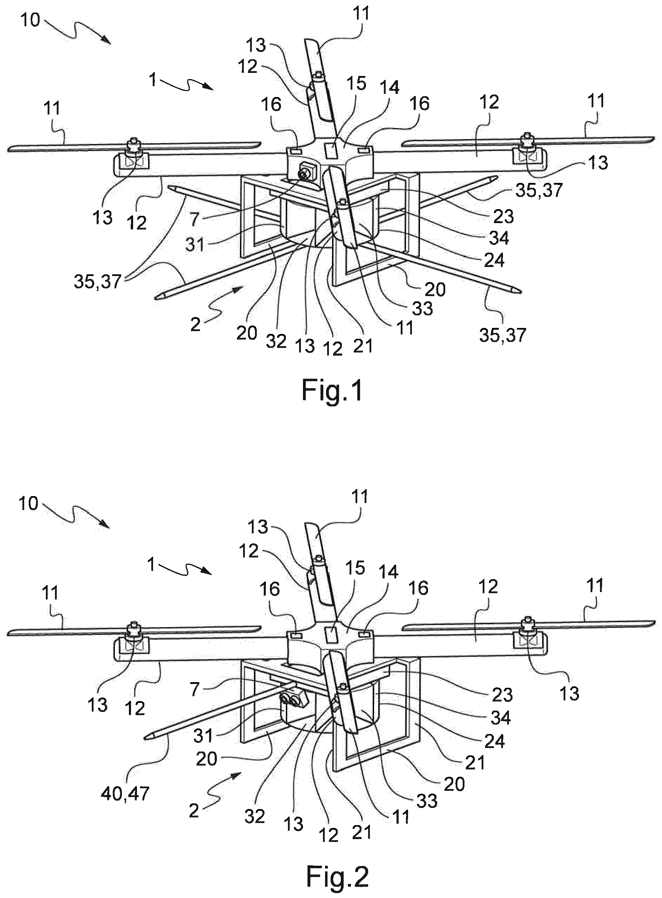

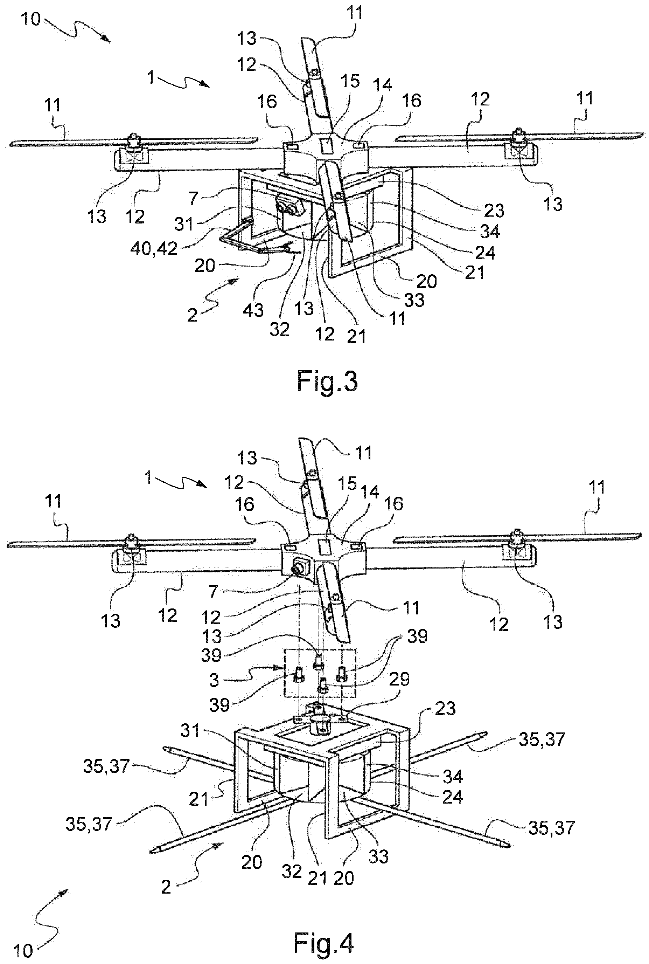

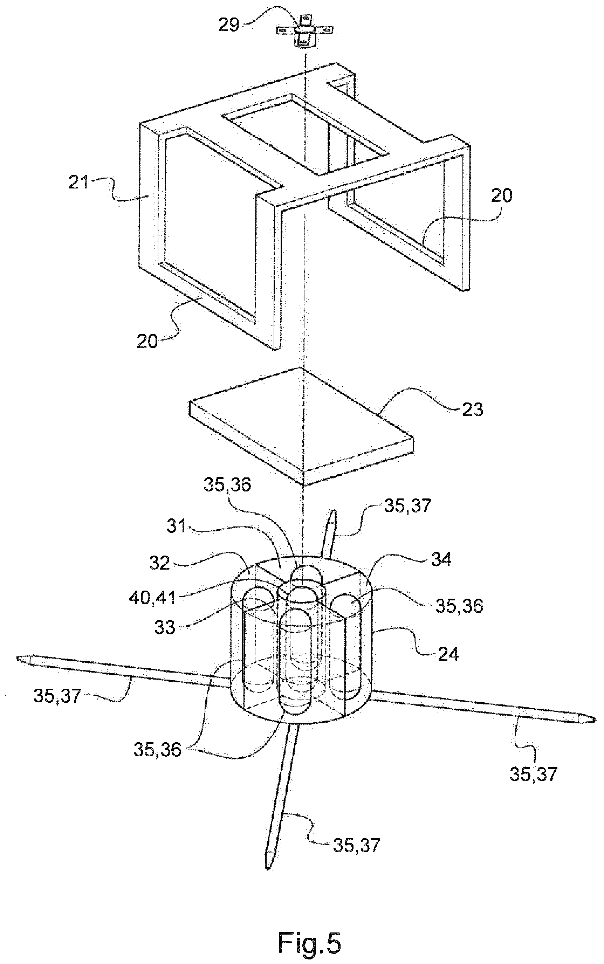

Le premier mode de réalisation du drone d'activités 10 est représenté sur les figures 1 et 4, une vue éclatée de son système d'activité 2 étant représentée sur la figure 5. Chaque compartiment 31,32,33,34 contient deux objets, une buse de pulvérisation 37 et un réservoir 36 contenant un fluide. Le pôle commun 40 comporte un générateur de pression 41 et un système de valves (non représenté) permettant de relier le fluide du compartiment 31,32,33,34 devant être utilisé avec le générateur de pression 41, ce système de valves étant piloté par le calculateur 23. De la sorte, ce système de valves permet au générateur de pression 41 d'agir sur le fluide et de le diriger vers la buse de pulvérisation 37 du compartiment 31,32,33,34 utilisé afin de pulvériser le fluide sur la zone de travail.

Selon ce premier mode de réalisation, le moteur rotatif 29 est agencé entre la structure 21 et le vecteur aérien 1, comme représenté sur la figure 4, permettant ainsi une rotation relative du dispositif de distribution 24 et de la structure 21 par rapport au vecteur aérien 1. Le dispositif de fixation 3 permet alors une liaison entre le moteur rotatif 29 et le corps central 14 du vecteur aérien 1 par l'intermédiaire des quatre vis 39.

De fait, la caméra de travail 7 est fixée sur le vecteur aérien 1, et en particulier sur le corps central 14 afin de permettre une vision sur la zone de travail lors d'un vol stationnaire du drone d'activités 10 et quelle que soit la position du dispositif de distribution 24.

Le pôle commun 40 est par exemple positionné au centre du dispositif de distribution 24 comme représenté sur la figure 5 afin que le système de valves relie le générateur de pression 41 avec le fluide de chaque compartiment 31,32,33,34.

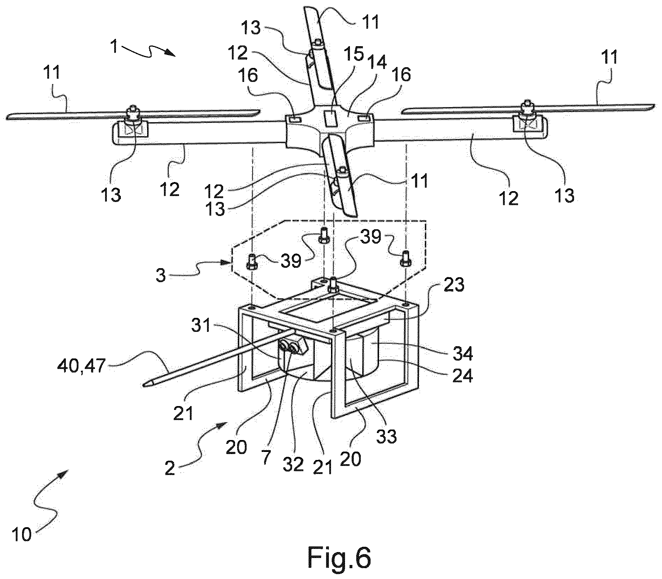

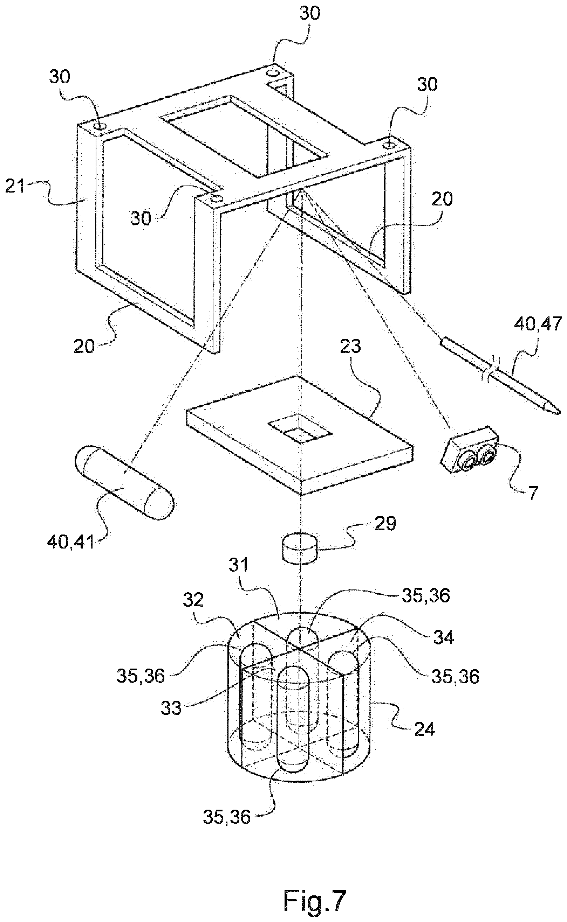

Le deuxième mode de réalisation du drone d'activités 10 est représenté sur les figures 2 et 6, une vue éclatée de son système d'activité 2 étant représentée sur la figure 7. Chaque compartiment 31,32,33,34 contient un seul objet 35, un réservoir 36 contenant un fluide. Le pôle commun 40 comporte une seule buse de pulvérisation 47, un générateur de pression 41 et un système de valves (non représenté). Ce système de valves permet de relier le fluide du compartiment 31,32,33,34 devant être utilisé avec le générateur de pression 41 et la buse de pulvérisation 47 du pôle commun 40, ce système de valves étant piloté par le calculateur 23. De la sorte, ce système de valves permet au générateur de pression 41 d'agir sur le fluide du compartiment 31,32,33,34 utilisé et de le diriger vers la buse de pulvérisation 47 du pôle commun 40 afin de pulvériser ce fluide sur la zone de travail.

Selon ce deuxième mode de réalisation, le moteur rotatif 29 est agencé entre la structure 21 et le dispositif de distribution 24 permettant ainsi une rotation relative du dispositif de distribution 24 par rapport à la structure 21 et au vecteur aérien 1. La structure 21 est alors fixe par rapport au vecteur aérien 1, le dispositif de fixation 3 permettant une liaison entre la structure 21 et les bras 12 du vecteur aérien 1 par l'intermédiaire des quatre vis 39 comme représenté sur la figure 6, la structure 21 comportant quatre trous 30.

La caméra de travail 7 est fixée sur la structure 21 qui est donc fixe par rapport au vecteur aérien 1 afin de permettre une vision sur la zone de travail lors d'un vol stationnaire du drone d'activités 10 et quelle que soit la position du dispositif de distribution 24.

Le pôle commun 40, à savoir la buse de pulvérisation 47, le système de valves et le générateur de pression 41, est quand à lui solidaire de la structure 21 afin que le système de valves relie d'une part le générateur de pression 41 avec le fluide du compartiment 31,32,33,34 utilisé et d'autre part ce fluide du compartiment 31,32,33,34 utilisé et la buse de pulvérisation 47. Le système de valves est alors piloté par le calculateur 23 afin que le générateur de pression 41 agisse sur le fluide du compartiment 31,32,33,34 devant être utilisé et de le diriger vers la buse de pulvérisation 47 du pôle commun 40 afin de pulvériser ce fluide sur la zone de travail.

Selon une variante de ce deuxième mode de réalisation, le dispositif de de distribution 24 peut être fixe par rapport à la structure 21 et au vecteur aérien 1. Dans ce cas, le système d'activité 2 ne comporte pas de moteur rotatif 29.

Ce premier et ce deuxième mode de réalisation du drone d'activités 10 sont en particulier destinés à la réalisation d'une analyse chimique avec plusieurs fluides sur la zone de travail afin par exemple de vérifier l'état de dégradation ou bien l'état de corrosion d'un pont ou bien d'un monument par exemple.

Pour le troisième mode de réalisation du drone d'activités 10 représenté sur la figure 3, chaque compartiment 31,32,33,34 peut contenir un ou plusieurs objets 35. Le pôle commun 40 comporte un bras articulé 42 muni d'une pince de préhension 43. Le bras articulé 42 peut alors saisir, par l'intermédiaire de la pince de préhension 43, un objet situé dans le compartiment 31,32,33,34 devant être utilisé et positionner ensuite cet objet à proximité de la zone de travail. Cet objet est par exemple un outil ou bien un tissu imprégné d'un composant réagissant avec un gaz spécifique.

Comme pour le deuxième mode de réalisation, la structure 21 est fixe par rapport au vecteur aérien 1 et le moteur rotatif 29 est agencé entre la structure 21 et le dispositif de distribution 24 permettant une rotation relative du dispositif de distribution 24 par rapport à la structure 21 et au vecteur aérien 1. Le dispositif de fixation 3 lie donc la structure 21 avec les bras 12 du vecteur aérien 1 et la caméra de travail 7 est fixée sur la structure 21.

Le pôle commun 40, à savoir le bras articulé 42, est également fixé sur la structure 21.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Notamment bien qu'uniquement un drone d'activités 10 comportant un vecteur aérien 1 muni de quatre bras 12 et de quatre rotors 11 ait été décrit, l'invention concerne également un drone d'activités 10 comportant un vecteur aérien 1 muni de trois, six, huit ou douze bras 12 et trois, six, huit ou douze rotors 11 par exemple.

De même, le dispositif de fixation 3 peut comporter tout moyen de fixation permettant une liaison fiable et facilement démontable entre le vecteur aérien 1 et le système d'activités 2.

La portée de l'invention est définie par les revendications annexées.

## Revendications

1. Drone d'activités (10) comportant :
- un vecteur aérien (1) muni d'au moins un rotor (11) participant à la sustentation et/ ou à la propulsion dudit drone (10),
- un système d'activités (2) comportant :
∘ une structure (21),
∘ un calculateur (23),
∘ au moins une caméra de travail (7) fixe par rapport audit vecteur aérien (1) et permettant une vision d'une zone de travail,
∘ un dispositif de distribution (24) pour réaliser successivement plusieurs tâches sur ladite zone de travail, ledit dispositif de distribution (24) comportant plusieurs compartiments (31,32,33,34) contenant au moins un objet (35), au moins une tâche étant attachée à chaque compartiment (31,32,33,34), et
∘ un moteur rotatif (29) permettant une rotation relative dudit dispositif de distribution (24) par rapport audit vecteur aérien (1) de sorte que ledit compartiment (31,32,33,34) devant être utilisé pour la réalisation d'une tâche se trouve à une position d'utilisation prédéterminée par rapport à ladite zone de travail,
- un dispositif de fixation (3) dudit système d'activités (2) audit vecteur aérien (1), **caractérisé en ce que** ledit au moins un objet (35) contenu dans plusieurs compartiments (31,32,33,34) est un tissu imprégné d'au moins un composant destiné à réagir à un gaz spécifique de sorte à analyser l'air et de détecter la présence éventuelle d'un gaz spécifique.

2. Drone d'activités (10) selon la revendication 1,
**caractérisé en ce que** ladite structure (21) est fixe par rapport audit vecteur aérien (1) et à ladite caméra de travail (7), ledit moteur rotatif (29) permettant une rotation relative dudit dispositif de distribution (24) par rapport à ladite structure (21) et audit vecteur aérien (1).

3. Drone d'activités (10) selon la revendication 1,
**caractérisé en ce que** ladite structure (21) est fixe par rapport audit dispositif de distribution (24), ledit moteur rotatif (29) permettant une rotation relative dudit dispositif de distribution (24) et de ladite structure (21) par rapport audit vecteur aérien (1).

4. Drone d'activités (10) selon l'une quelconque des revendications 1 à 3,
**caractérisé en ce que** ledit système d'activités (2) comporte un pôle commun (40) utilisé de façon commune par plusieurs compartiments (31,32,33,34) pour la réalisation de plusieurs tâches.

5. Drone d'activités (10) selon la revendication 4,
**caractérisé en ce que** ledit pôle commun (40) comporte un générateur de pression (41) et une buse de pulvérisation (47) alors qu'un objet (35) contenu respectivement dans plusieurs compartiments (31,32,33,34) est un fluide de sorte que, lorsqu'un desdits compartiments (31,32,33,34) comportant un fluide est utilisé pour la réalisation d'une tâche, ledit système d'activités (2) pulvérise ledit fluide contenu dans ledit compartiment (31,32,33,34) à travers ladite buse de pulvérisation (47) dudit pôle commun (40) sur ladite zone de travail.

6. Drone d'activités (10) selon la revendication 4,
**caractérisé en ce que** ledit pôle commun (40) comporte un générateur de pression (41) alors que des objets (35) contenus respectivement dans plusieurs compartiments (31,32,33,34) sont un fluide et une buse de pulvérisation (37) de sorte que, lorsqu'un desdits compartiments (31,32,33,34) contenant un fluide et une buse de pulvérisation (37) se trouve à ladite position d'utilisation prédéterminée pour la réalisation d'une tâche, ledit système d'activités (2) pulvérise ledit fluide à travers ladite buse de pulvérisation (37) dudit compartiment (31,32,33,34) sur ladite zone de travail.

7. Drone d'activités (10) selon l'une quelconque des revendications 4 à 6,
**caractérisé en ce que** ledit pôle commun (40) comporte un bras articulé (42) de sorte que, lorsqu'un desdits compartiments (31,32,33,34) se trouve à ladite position d'utilisation prédéterminée pour la réalisation d'une tâche, ledit bras articulé (42) se saisit d'un objet (35) contenu dans ledit compartiment (31,32,33,34) pour réaliser ladite tâche.

8. Drone d'activités (10) selon l'une quelconque des revendications 1 à 7,
**caractérisé en ce que** ledit calculateur (23) comporte un dispositif d'analyse d'images configuré afin d'analyser les images fournies par chaque caméra de travail (7) et de réaliser lesdites tâches de façon autonome.

9. Drone d'activités (10) selon l'une quelconque des revendications 1 à 8,
**caractérisé en ce que** ladite structure (21) forme un train d'atterrissage (20) fixe.

10. Drone d'activités (10) selon l'une quelconque des revendications 1 à 9,
**caractérisé en ce que** ledit drone d'activités (10) comporte un dispositif de communication afin de recevoir des ordres de commande d'un opérateur et de transmettre audit opérateur des images fournies par chaque caméra de travail (7).

11. Drone d'activités (10) selon l'une quelconque des revendications 1 à 10,
**caractérisé en ce que** ledit drone d'activités (10) comporte un dispositif de localisation (15) de sorte à se positionner dans un repère terrestre.

12. Drone d'activités (10) selon l'une quelconque des revendications 1 à 11,
**caractérisé en ce que** ledit drone d'activités (10) comporte des dispositifs de positionnement (16,17) dans son environnement de sorte à évoluer de façon autonome.

## Patentansprüche

1. Drohne für Aktivitäten (10), umfassend:
- ein Fluggerät (1), das mit mindestens einem Rotor (11) versehen ist, der an dem Auftrieb und/oder dem Antrieb der Drohne (10) beteiligt ist,
- ein Aktivitätssystem (2) mit :
• einer Struktur (21),
• einem Rechner (23),
• mindestens einer Arbeitskamera (7), die in Bezug auf das Fluggerät (1) fest angebracht ist und einen Blick auf einen Arbeitsbereich ermöglicht,
• einer Ausgabevorrichtung (24) zum aufeinanderfolgenden Ausführen mehrerer Aufgaben in dem Arbeitsbereich, wobei die Ausgabevorrichtung (24) mehrere Fächer (31, 32, 33, 34) aufweist, die mindestens einen Gegenstand (35) enthalten, wobei mindestens eine Aufgabe mit jedem Fach (31, 32, 33, 34) verknüpft ist, und
• einem Drehmotor (29), der eine relative Drehung der Ausgabevorrichtung (24) in Bezug zu dem Fluggerät (1) ermöglicht, so dass sich das Fach (31, 32, 33, 34), das zur Durchführung einer Aufgabe verwendet werden soll, an einer vorbestimmten Verwendungsposition in Bezug auf den Arbeitsbereich befindet,
- eine Vorrichtung zum Befestigen (3) des Aktivitätssystems (2) an dem Fluggerät (1),
**dadurch gekennzeichnet, dass** das mindestens eine in mehreren Kammern (31, 32, 33, 34) enthaltene Objekt (35) ein Gewebe ist, das mit mindestens einer Komponente zur Reaktion mit einem spezifischen Gas imprägniert ist, um die Luft zu analysieren und das mögliche Vorhandensein eines spezifischen Gases zu erfassen.

2. Drohne für Aktivitäten (10) nach Anspruch 1,
**dadurch gekennzeichnet, dass** die Struktur (21) in Bezug auf das Fluggerät (1) und die Arbeitskamera (7) fest ist, und dass der Drehmotor (29) eine relative Drehung der Verteilungsvorrichtung (24) in Bezug auf die Struktur (21) und das Fluggerät (1) ermöglicht.

3. Drohne für Aktivitäten (10) nach Anspruch 1,
**dadurch gekennzeichnet, dass** die Struktur (21) in Bezug auf die Ausgabevorrichtung (24) fest ist, und dass der Drehmotor (29) eine relative Drehung der Ausgabevorrichtung (24) und der Struktur (21) in Bezug auf das Fluggerät (1) ermöglicht.

4. Drohne für Aktivitäten (10) nach einem der Ansprüche 1 bis 3,
**dadurch gekennzeichnet, dass** das Aktivitätssystem (2) einen gemeinsamen Bereich (40) aufweist, der von mehreren Kammern (31, 32, 33, 34) zur Durchführung mehrerer Aufgaben gemeinsam genutzt wird.

5. Drohne für Aktivitäten (10) nach Anspruch 4,
**dadurch gekennzeichnet, dass** der gemeinsame Bereich (40) einen Druckerzeuger (41) und eine Sprühdüse (47) umfasst, während ein jeweils in mehreren Kammern (31, 32, 33, 34) enthaltenes Objekt (35) ein Fluid ist, so dass, wenn eine der ein Fluid enthaltenden Kammern (31, 32, 33, 34) zur Durchführung einer Aufgabe verwendet wird, das Aktivitätssystem (2) das in der Kammer (31, 32, 33, 34) enthaltene Fluid durch die Sprühdüse (47) des gemeinsamen Bereichs (40) auf den Arbeitsbereich sprüht.

6. Drohne für Aktivitäten (10) nach Anspruch 4,
**dadurch gekennzeichnet, dass** der gemeinsame Bereich (40) einen Druckerzeuger (41) umfasst, während Objekte (35), die jeweils in mehreren Kammern (31, 32, 33, 34) enthalten sind, ein Fluid und eine Sprühdüse (37) sind, so dass, wenn eine der Kammern (31, 32, 33, 34) 34) ein Fluid enthält und sich eine Sprühdüse (37) an der vorbestimmten Verwendungsposition zur Durchführung einer Aufgabe befindet, das Aktivitätssystem (2) das Fluid durch die Sprühdüse (37) aus der Kammer (31, 32, 33, 34) auf den Arbeitsbereich sprüht.

7. Drohne für Aktivitäten (10) nach einem der Ansprüche 4 bis 6,
**dadurch gekennzeichnet, dass** der gemeinsame Bereich (40) einen Gelenkarm (42) aufweist, so dass, wenn sich eine der Kammern (31, 32, 33, 34) in der vorbestimmten Gebrauchsposition zum Ausführen einer Aufgabe befindet, der Gelenkarm (42) sich mit einen in der Kammer (31, 32, 33, 34) enthaltenen Gegenstand (35) befasst, um die Aufgabe auszuführen.

8. Drohne für Aktivitäten (10) nach einem der Ansprüche 1 bis 7,
**dadurch gekennzeichnet, dass** der Rechner (23) eine Bildanalysevorrichtung umfasst, die konfiguriert ist, um die von jeder Arbeitskamera (7) gelieferten Bilder zu analysieren und die Aufgaben autonom auszuführen.

9. Drohne für Aktivitäten (10) nach einem der Ansprüche 1 bis 8,
**dadurch gekennzeichnet, dass** die Struktur (21) ein festes Landegestell (20) bildet.

10. Drohne für Aktivitäten (10) nach einem der Ansprüche 1 bis 9,
**dadurch gekennzeichnet, dass** die Drohne für Aktivitäten (10) eine Kommunikationsvorrichtung umfasst, um Steuerbefehle von einem Bediener zu empfangen und dem Bediener Bilder zu übertragen, die von jeder Arbeitskamera (7) bereitgestellt werden.

11. Drohne für Aktivitäten (10) nach einem der Ansprüche 1 bis 10,
**dadurch gekennzeichnet, dass** die Drohne für Aktivitäten (10) eine Ortungsvorrichtung (15) aufweist, um sich selbst in einer erdgebundenen Bezugssystem zu positionieren.

12. Drohne für Aktivitäten (10) nach einem der Ansprüche 1 bis 11,
**dadurch gekennzeichnet, dass** die Drohne für Aktivitäten (10) Vorrichtungen (16, 17) zur Positionierung in ihrer Umgebung umfasst, so dass sie sich autonom bewegen kann.

## Claims

1. Activity drone (10) comprising:
- an aerial vehicle (1) provided with at least one rotor (11) participating in lift and/or propulsion of the said drone (10),
- an activity system (2) comprising:
o a structure (21),
o a computer (23)
o at least one working camera (7) which is fixed relative to the said aerial vehicle (1) and allows viewing of a working zone,
∘ a distribution device (24) for successively carrying out a plurality of tasks on the said working zone, the said distribution system (24) comprising a plurality of compartments (31, 32, 33, 34) containing at least one object (35), at least one task being assigned to each compartment (31, 32, 33, 34), and
o a rotary motor (29) allowing rotation of the said distribution device (24) relative to the said aerial vehicle (1) so that the said compartment (31, 32, 33, 34) intended to be used in order to carry out a task lies at a predetermined position of use relative to the said working zone,
- a fixing device (3) for fixing the said activity system (2) to the said aerial vehicle (1),
**characterised in that** the said at least one object (35) contained in a plurality of compartments (31, 32, 33, 34) is a fabric impregnated with at least one component intended to react with a specific gas so as to analyse the air and detect the possible presence of a specific gas.

2. Activity drone (10) according to claim 1,
**characterised in that** the said structure (21) is fixed relative to the said aerial vehicle (1) and relative to the said working camera (7), the said rotary motor (29) allowing rotation of the said distribution device (24) relative to the said structure (21) and relative to the said aerial vehicle (1).

3. Activity drone (10) according to claim 1,
**characterised in that** the said structure (21) is fixed relative to the said distribution device (24), the said rotary motor (29) allowing rotation of the said distribution device (24) and of the said structure (21) relative to the said aerial vehicle (1).

4. Activity drone (10) according to any one of claims 1 to 3,
**characterised in that** the activity system (2) comprises a common pole (40) used in common by a plurality of compartments (31, 32, 33, 34) in order to carry out a plurality of tasks.

5. Activity drone (10) according to claim 4,
**characterised in that** the said common pole (40) comprises a pressure generator (41) and a spray nozzle (47) when an object (35) respectively contained in a plurality of compartments (31, 32, 33, 34) is a fluid, so that, when one of the said compartments (31, 32, 33, 34) comprising a fluid is used in order to carry out a task, the said activity system (2) sprays the said fluid contained in the said compartment (31, 32, 33, 34) through the said spray nozzle (47) of the said common pole (40) onto the said working zone.

6. Activity drone (10) according to claim 4,
**characterised in that** the said common pole (40) comprises a pressure generator (41) when objects (35) respectively contained in a plurality of compartments (31, 32, 33, 34) are a fluid, and a spray nozzle (37), so that, when one of the said compartments (31, 32, 33, 34) containing a fluid and a spray nozzle (37) are in the said predetermined position of use in order to carry out a task, the said activity system (2) sprays the said fluid through the said spray nozzle (37) of the said compartment (31, 32, 33, 34) onto the said working zone.

7. Activity drone (10) according to any one of claims 4 to 6,
**characterised in that** the said common pole (40) comprises an articulated arm (42), so that, when one of the said compartments (31, 32, 33, 34) is in the said predetermined position of use in order to carry out a task, the said articulated arm (42) grips an object (35) contained in the said compartment (31, 32, 33, 34) in order to carry out the task.

8. Activity drone (10) according to any one of claims 1 to 7,
**characterised in that** the said computer (23) comprises an image analysis device configured in order to analyse the images provided by each working camera (7) and in order to carry out the said tasks autonomously.

9. Activity drone (10) according to any one of claims 1 to 8,
**characterised in that** the said structure (21) forms fixed landing gear (20).

10. Activity drone (10) according to any one of claims 1 to 9,
**characterised in that** the said activity drone (10) comprises a communication device in order to receive command instructions from an operator and in order to transmit images provided by each working camera (7) to the said operator.

11. Activity drone (10) according to any one of claims 1 to 10,
**characterised in that** the said activity drone (10) comprises a locating device (15) so as to position itself in a terrestrial reference frame.

12. Activity drone (10) according to any one of claims 1 to 11,
**characterised in that** the said activity drone (10) comprises positioning devices (16, 17) for positioning in its environment so as to move autonomously.
